# EUROPEAN PATENT APPLICATION

(11) **EP 2 610 713 A2**
(43) Date of publication of application: **03.07.2013**
(21) Application number: 11820215.9
(22) Date of filing: 26.08.2011
(51) Int. Cl.: G06F 3/02, H04M 1/02

(54) **INPUT METHOD USING ALL OF THE FINGERS OF ONE HAND**

(30) Priority: 26.08.2010 KR 20100083008
(71) Applicant: Kang, Dong-Koo, Seoul 137-796 (KR)
(72) Inventor: Kang, Dong-Koo, Seoul 137-796 (KR)
(74) Representative: Richter Werdermann Gerbaulet Hofmann
(86) International application number: PCT/KR2011/006332
(87) International publication number: WO 2012/026788

(57) **Abstract**

The present invention relates to an input method for a device such as a cellular phone or a smart phone. According to the present invention, the positions of input buttons are harmonized with the movement or flow of each finger so that all fingers of one hand holding a device can be used, thereby achieving the efficient and convenient input actions. Furthermore, the other hand, which is not used to hold the device, can be set free. The region of a display screen is so separate from the region of buttons as to accomplish the maximum display screen. The method according to the present invention also contributes to the health of a user because it can allow the user to do away with a computer keyboard.

## Description

### BACKGROUND

### Field of the Invention

The present disclosure relates to an input method applicable to such a device as cellular phone or a smart phone.

### Description of the Related Art

The early phase of such devices as cellular phones or smart phones were limited to use for voice communications without large display screens or text input. Thus, numeric buttons for inputting phone numbers and a few other buttons for functional purposes could sufficiently meet the demand for buttons of a device. Furthermore, a small size of a display screen was sufficient if the screen could display a telephone number of the other person in communication, and the arrangement of the display screen and buttons in the same face of the device caused no problem.

However, as a display screen plays a bigger role in the device, the screen has been required to be enlarged to its maximum size for the device. As a result, a method of using two faces of a device has been widely used by adding a plate with buttons attached in a folding-type or sliding-type device, thereby making the screen and the buttons arranged in different faces respectively.

Recently, a type of touch screen buttons has been developed whereby input is performed by touching buttons with a finger, which may be displayed on the screen on demand, while physical buttons do not exist. This makes a portion of buttons in a device to be disappeared on demand, thereby allowing the device to have a display screen with its maximum size.

On the other hand, for the purpose of more quickly entering many different characters when text-messaging, there exists a method of arranging many buttons on both sides of such a device as a cellular phone and then using all fingers of both hands for input when the device is grasped by both hands. However, the application of such a method in practice is not still very well known.

In the meantime, other devices such as personal computers use a physical keyboard for input, whereby both hands are located on the keyboard and all fingers are used for input by pressing buttons two-dimensionally arranged on the keyboard. As alternatives to such a simply two-dimensional arrangement, other arrangements including a keyboard waved from side to side and/or from level to level are being used, considering ergonomically the ability of wrists to bend.

### SUMMARY

### Technical Problem to be Solved

Known input methods for such a device as a cellular phone or a smart phone allow manipulating the device by touching or pressing character buttons and/or functional buttons that are arranged two-dimensionally on the front side of the device, and, due to the relative position of fingers, such manipulation is typically performed only by the thumb of one hand holding the device, or by one or two fingers, at most, if the thumb or the forefinger of the other hand assists the hand holding the device. Such prior methods are substantially inefficient because only parts of fingers are in use and other fingers do not contribute to the manipulation of the device.

Also, known input methods for a device can allow fingers to move quickly and conveniently when the device has a small number of character buttons. However, such known input methods make the input actions significantly slow because the same button of the device may be assigned to different characters and, therefore, it frequently happens that the same button is pressed on several times to input certain characters. As a result, when the characters assigned to one button need to be subsequently entered, the input of the subsequent character should be delayed until the input of the preceding character is processed, or an additional button should be pressed on to communicate the end of the preceding input.

To avoid the disadvantage illustrated above, there has been known a device having an increased number of buttons so that one button is to be pressed for input of one character. This method can eliminate the delay in inputting characters in series, but requires many buttons to be arranged on a limited area of a device. Therefore, each button should be positioned in a small area, the buttons are closely arranged each other in a narrow distance, and the moving distance of each finger is long, thereby making it difficult for fingers, which are relatively bigger than buttons in size, to press on an intended button in a quick and precise motion. Furthermore, the buttons are too many for one finger of a hand to cover, and thus the other hand should be used for help. Despite the assistance of the other hand, the accuracy of pressing buttons is still problematic as discussed above, and the speed of input is hardly improved. Rather, using both hands will cause another problem because both hands should stick to the input work, thereby gripping even both eyes to the work.

Using a touch screen method having a portion of the screen itself used for buttons may allow the maximized screen size because it can hide the button portion as necessary. However, it still needs to display buttons in the same screen and spends a significant area of the screen, and thus the problems explained above remains unresolved.

In addition to the disadvantages discussed above, the prior method of adding a separate part with a folding or sliding mechanism in order to place a screen and buttons in separate sides has a problem of attaching a separate, superfluous part to a device, which would account for a significant part of the device.

An input method of using all fingers of both hands for input while both hands hold such a device as a cellular phone, both sides of which have many buttons, may have an advantage of entering many kinds of characters quickly, but has disadvantages since a device should have such a long body that both hands can grasp the device and both hands need to be used for input actions.

Keyboards used for a computer employ a two-dimensional arrangement of buttons, which has been used since the era of traditional typewriters. Such keyboards have both hands positioned and used on the keyboards and allow speedy input actions. However, they constrain the posture of a user, making the user uncomfortable. This method has other disadvantages because it requires using both hands, prevents a keyboard from being made as much smaller, and requires the keyboard to be placed on a flat surface.

### Brief Summary of the Invention

To overcome the problems discussed above, the present disclosure includes an input method that is applicable to such a device as a cellular phone or a smart phone, which has such a size that one hand can grasp the entire device and requires so large a display screen as to account for the entire face of the device. The device in accordance of the present disclosure uses most of the front side of the device as a display screen. The device has character buttons so arranged on one side of the device that all fingers excluding the thumb can easily reach the buttons, considering the movement and flow of each finger. In the meantime, each button so arranged is assigned only to one character. To accomplish the arrangement, it is preferable to arrange all alphabets of a language on one side of the device, or to arrange at least half of the alphabets on the side with a shift button that allows using two levels of arrangement in combination so as to keep the principle that each character button is used for input of one character only. Furthermore, the shift button and functional buttons are arranged on the other side, upper side, and/or other portions of the device to which the thumb and the forefinger can easily access, considering the movement or flow of the thumb and the forefinger. With such structures, the input method according to the present disclosure can allow all fingers of one hand that holds the device to be used for input actions.

The present disclosure also includes an input method of using all fingers of one hand that is holding an input device. The input device is separate from a body and connected either with or without wire to the body, and has a size which allows one hand to hold the input device. The input device includes a regular telephone, a television remote controller, or a remote controller for other devices, which has no display screen or only a small display screen. The input device is structured based on the arrangement illustrated above, and can also avoid such a restraint as having to use the front side of a device as a screen display or having to use a thin rectangular body for easy portability. In the input device according to the present disclosure, therefore, character buttons are arranged on a portion of the device that four fingers, except the thumb, can easily reach, and shift buttons and functional buttons are arranged on the other portions of the device that the thumb and the forefinger can easily reach, so that the entire device can be easily held by one hand and have a three-dimensional appearance. The device as structured here is identified as a "bird" in a sense that the device can move in a three-dimensional space, as opposed to a 'mouse,' an input device sliding on a two-dimensional plane.

For such a device as a computer, the present disclosure also includes a method of using a bird, as indicated above, as an input device in order to replace a keyboard, the bird being connected either with or without wire to the device. Also, the method according to the present disclosure can use two numbers of birds with both hands while the bird held by one hand has the same function as or a compensatory function with the bird held by the other hand.

### Technical Effects

The present invention makes the use of such a device as a cellular phone or a smart phone more efficient because all fingers of a hand holding the device are used for input. According to the present invention, each finger has an operational region different from other fingers, and thus will not interfere with other fingers. Because each finger is assigned to only a few buttons, and move, or flow, a very short path, the accuracy and speed of input are enhanced. Thanks to the harmonized arrangement of buttons and fingers, the fingers can conveniently move. Using all fingers can avoid overusing only a few fingers and also prevent other fingers, which would not otherwise have been used, from being lack of exercise in use. Using only one hand can allow a human body to move more freely by making the other hand set free, and contribute to his or her health.

Furthermore, the present disclosure allows arranging character buttons and functional buttons on the sides or the upper portion, other than the front side having a display screen, of a device such as a cellular phone or a smart phone. Therefore, any problem arising out of arranging both of a display screen and buttons in the same face, which has been a disadvantage of prior arts, is eliminated. The present disclosure can also get rid of separate parts with a folding or sliding mechanism, and thus decrease the weight and volume of a device, and also reduce manufacturing costs.

### BRIEF DESCRIPTION OF THE DRAWINGS

FIG. 1 is a view illustrating the front side of a device with a display screen according to the present disclosure, the device being used with a left hand;

FIG. 2 shows the right side of the device illustrating the operation area of four fingers except the thumb, the device being used with a left hand;

FIG. 3 shows the left side of the device illustrating one of the operation areas of the thumb, the device being used with a left hand;

FIG. 4 shows the upper side of the device illustrating one of the operation areas of the thumb and the forefinger, the device being used with a left hand; and

FIG. 5 is the rear side of the device being used with a left hand.

### DETAILED DESCRIPTION

### Best Mode

An exemplary embodiment according to the present invention is illustrated as below in reference with the accompanying drawings.

An input method according an embodiment may arrange all buttons for the alphabets of a country on one side of a device, and each button is assigned to one character of the alphabets. Alternatively, the input method may arrange buttons on one side of a device, each of which is assigned to one character of the alphabets of a country, so that at least half of all the alphabets are allotted to the buttons, and may employ a shift button so that two levels of character arrangement are to be used. Such two different methods are not superior over each other in effect, and may thus be selected as necessary. In this embodiment, the latter method will be primarily illustrated.

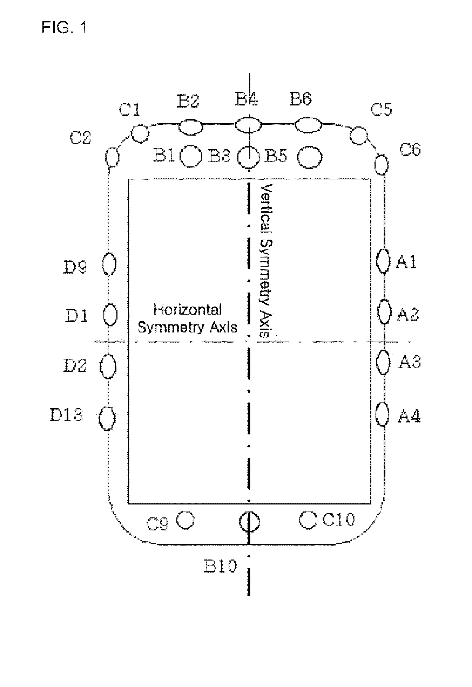

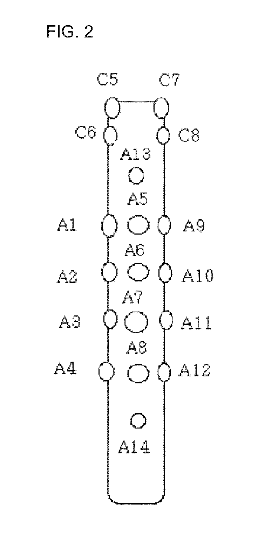

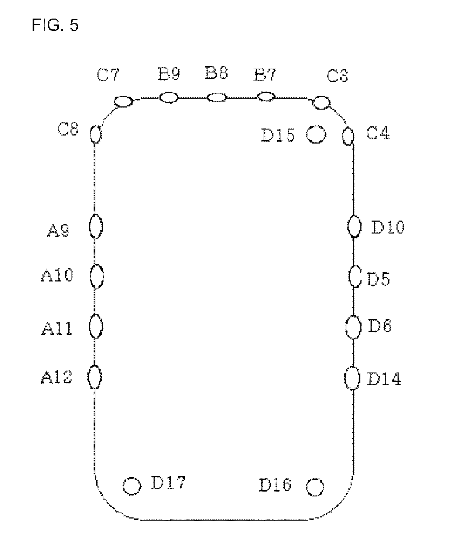

As shown in FIGS. 1, 2 and 5, character buttons A1-A14 are arranged on the right side of a device which four fingers, except the thumb, can easily reach, and the buttons are to be appropriately allotted to each finger. Each character button may be used to enter an assigned character in combination with a shift button.

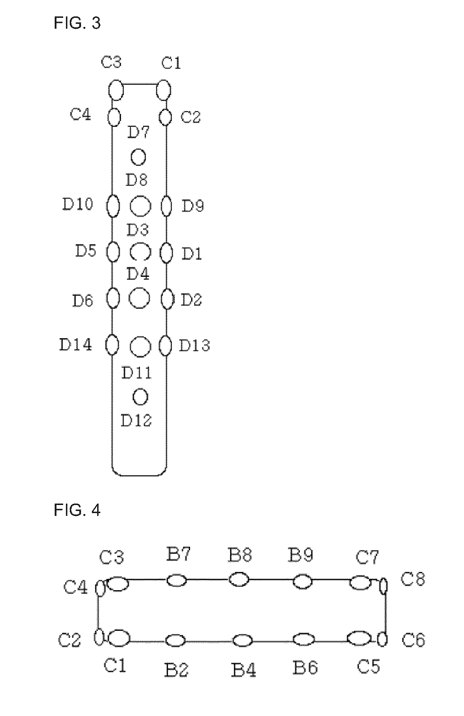

As shown in FIGS. 1 to 5, several shift buttons B1-B10 and a first type of functional buttons C1-C10 are arranged on the upper side of the device which the thumb and the forefinger can easily reach. A second type of functional buttons D1-D17 are arranged on another appropriate place of a device.

The shift buttons B1-B10 include shift buttons used to enter a first character group, a second character group, capital letters, small letters, numbers, calculations, a first language, a second language, a third language and special characters.

The first type of functional buttons C1-C10 includes ENTER, CONTROL, SPACE, BACKSPACE, INSERT, TAB, DELETE, ALT, FUNCTION, and ESC.

The second type of functional buttons D1-D16 include a menu button, a call button, a message button, a contacts button, a confirm button, a cancellation button, a silent mode button, a power button, a user setting button, and a camera button, and also includes right/left and up/down buttons and volume adjusting buttons.

The types and positions of the buttons on each side can be modified to meet design needs when necessary. The second group of functional buttons can include a user setting button so that a user can change the role of each button as necessary.

The illustration above considers a left-handed user. In favor of a right-handed user, the display screen and the buttons of the present embodiment can be modified to be symmetric to the structure of FIG. 1 in reference to the horizontal axis, and the buttons can also be modified to be symmetric to the structure of FIG. 1 in reference to the vertical axis. Furthermore, the device according to the present embodiment may have not only buttons for a left-handed user but also buttons for a right-handed user, and thus allows using either the left hand or the right hand, depending on a user situation.

### Detailed Description of the Exemplary Embodiment

As an exemplary embodiment, the references and the parenthesized content accompanied by the references, as shown below, illustrate the name of each button and the associated assignment or function of the button, when the first language is Korean and the second language is English.

The combination of the first language and the first group of character buttons: A1(¬), A2(∟), A3(⊏), A4( 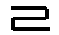 ), A5(□), A6( 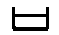 ), A7( 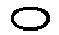 ), A8( 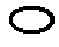 ), A9( 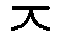 ), A10( 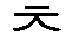 ), A11( 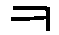 ), A12( 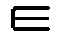 ), A13( 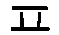 ), A14( 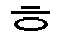 ).

The combination of the first language and the second group of character buttons: A1(├), A2(┤), A3(⊥), A4( 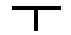 ), A5( 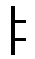 ), A6( 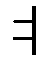 ), A7( 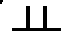 ), A8( 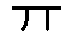 ), A9( 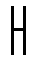 ), A10( 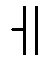 ), A11( 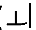 ), A12( 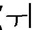 ), A13(_), A14(|).

The combination of the second language and the first group of character buttons: A1(A), A2(B), A3(C), A4(D), A5(E), A6(F), A7(G), A8(H), A9(I), A10(J), A11(K), A12(L), A13(Y), A14(Z).

The combination of the second language and the second group of character buttons: A1(M), A2(N), A3(O), A4(P), A5(Q), A6(R), A7(S), A8(T), A9(U), A10(V), A11(W), A12(X), A13(Y), A14(Z).

The combination with the number buttons: A1(1), A2(2), A3(3), A4(4), A5(5), A6(6), A7(7), A8(8), A9(9), A10(0), A11(0), A12(0), A13(.), A14(,).

The combination with the operation buttons: A1(+), A2(-), A3(*), A4(/), A5(=), A6(ROOT), A7(( ), A8( ) ), A9( ), A10( ), A11( [ ), A12( ] ), A13(C), A14(AC). (Whenever the operation button is pressed on again, another combination of fourteen operation buttons may be ready for work and such a new combination of operation buttons are displayed on the screen.)

The combination with the special character buttons: A1(?), A2(!), A3( ), A4( ), A5( ), A6( ), A7(:), A8(;), A9(@), A10(#), A11($), A12(%), A13(, A14(&). (Whenever the special character button is pressed on again, another combination of fourteen special character buttons may be ready for work and such a new combination of special character buttons are displayed on the screen.)

The combination with the shift buttons: B1(the first character group), B2(the second character group), B3(capital letters), B4(small letters), B5(numbers), B6(operators), B7(the first language), B8(the second language), B9(the third language), B10(the special characters).

The combination with the first type of functional buttons: C1(ENTER), C2(CONTROL), C3(SPACE), C4(BACKSPACE), C5(INSERT), C6(TAB), C7(DELETE), C8(ALT), C9(FUNCTION), C10(ESC).

The combination with the second type of functional buttons: D1(Call), D2(Message), D3(Confirm), D4(Cancel), D5(Contacts), D6(Silent mode), D7(UP), D8(DOWN), D9(RIGHT), D10(LEFT), D11(HIGH), D12(LOW), D13(Menu), D14( ), D15(Power), D16(User setting), D17(Camera).

## Claims

1. An input method of using all fingers of one hand that is holding a device, such as a cellular phone or a smart phone, the device being held by one hand and having a display screen on the entire front side of the device, wherein the entire front side of the device is substantially used for a display screen,
wherein character buttons are arranged on one side of the device which four fingers, except the thumb, can easily reach, considering the movement and flow of each finger, wherein all the alphabets of a language are so assigned to the buttons that each character is allotted to one button, or at least half of the alphabets are so assigned to the buttons that two levels of arrangement combination can be used with a shift button, thereby keeping the principle that each character button is allotted to one button,
wherein shift buttons and functional buttons are arranged on the other side of the device, the upper side of the device, and other portions of the device, which the thumb and the forefinger can easily reach, considering the movement and flow of the thumbs and the forefinger.

2. An input method of using all fingers of one hand that is holding an input device, such as a regular telephone, a television remote controller, or a remote controller for other devices, which has no display screen or a small display screen, the input device being separate from a body and connected either with or without wire to the body, and being able to be held by one hand, whereby the device does not use the front side thereof for a display screen and does not have to use a thin rectangular body for easy portability,
wherein, as structured according to Claim 1, character buttons are arranged on a portion of the device that four fingers, except the thumb, can easily reach, and shift buttons and functional buttons are arranged on the other portions of the device that the thumb and the forefinger can easily reach, so that the entire device can be easily held by one hand and have a three-dimensional appearance. (The device as structured here is identified as a "bird" in a sense that the device can move in a three-dimensional space, being compared with a 'mouse,' an input device sliding on a two-dimensional plane.)

3. A method of using the bird according to Claim 2 as an input device, replacing a keyboard, the bird being connected either with or without wire to a device, such as a computer; or
a method of using the birds with both hands, wherein the bird held by one hand has the same function as, or a compensatory function with, the bird held by the other hand.

4. A method of using the bird according to Claim 2 as an input device for a carrier such as an airplane, a car, or a ship, or as an input device for all sorts of machinery or instruments, wherein the bird is attached to the control handle or the body thereof, thereby restraining the movement of the bird; or
a method of using the birds with both hands, wherein the bird held by one hand has the same function as, or a compensatory function with, the bird held by the other hand.

5. A method of using the device to which the method according to Claim 1 is applied, the device being used as an alternative input device for different kinds of device with either a wired or a wireless connection.
